# EUROPÄISCHE PATENTSCHRIFT

(11) **EP 1 957 348 B1**
(45) Veröffentlichungstag und Bekanntmachung des Hinweises auf die Patenterteilung: **08.09.2010**
(21) Anmeldenummer: 06828590.7
(22) Anmeldetag: 01.12.2006
(51) Int. Cl.: B62D 59/04, B62D 61/10

(54) **FAHRZEUGVERBUND**
VEHICLE COMBINATION
VEHICULE COMPOSITE

(30) Priorität: 01.12.2005 DE 102005057652
(43) Veröffentlichungstag der Anmeldung: 20.08.2008
(73) Patentinhaber: KUKA Roboter GmbH, 86165 Augsburg (DE)
(72) Erfinder: GÜNTHER, Wolfgang, 38239 Salzgitter (DE)
(74) Vertreter: Stornebel, Kai
(86) Internationale Anmeldenummer: PCT/DE2006/002135
(87) Internationale Veröffentlichungsnummer: WO 2007/062640

(56) Entgegenhaltungen:
- FR-A- 2 680 144
- US-A- 5 379 842
- US-A1- 2005 230 934

## Beschreibung

Die Erfindung betrifft einen Fahrzeugverbund aus einer Vielzahl von Einzelfahrzeugen mit einem Chassis, bei dem zumindest an einem Einzelfahrzeug ein einzeln antreibbares und abbremsbares Rad angeordnet ist, das einen Radträger mit an dessen Umfang angeordneten Rollkörpern aufweist, die eine ballige Kontur aufweisen und deren Drehachsen in einem Winkel zu der Drehachse des Radträgers angeordnet sind, mit denen eine Bewegung des Einzelfahrzeuges in alle Richtungen in der Fahrebene möglich ist.

Aus dem Stand der Technik, z.B. der DE 38 41 971 C2 sind Einzelfahrzeuge mit sogenannten Meccanum-Rädern bekannt, die einen Radträger mit an dessen Umfang angeordneten Rollkörpern aufweisen, wobei die Rollkörper eine ballige Kontur haben und Drehachsen in einem Winkel zu der Drehachse des Radträgers angeordnet sind. Der Winkel beträgt bevorzugt 45°. Mit solchen Fahrzeugen ist eine Bewegung in alle Richtungen in einer Fahrebene möglich. Aus dem Stand der Technik sind nur Einzelfahrzeuge mit solchen Rädern oder Antrieben bekannt.

Insbesondere im Anlagen- oder Flugzeugbau ist es notwendig, schwere Lasten hochpräzise verfahren zu können. Dazu müssen Transporteinrichtungen bereitgestellt werden, die einerseits eine hohe Tragfähigkeit aufweisen, andererseits exakt positionierbar sind. Mit den aus dem Stand der Technik bekannten Einzelfahrzeugen sind in der Regel nur Lasten bis zu 10 t präzise verfahrbar.

Die US 5,379,842 beschreibt einen Fahrzeugverbund gemäß dem Oberbegriff des Anspruchs 1, als ein Materialhandhabungsgerät mit Radeinheiten, die individuell ansteuerbar ausgebildet sind.

Eine Verteilung auf mehrere separate Einzelfahrzeuge ist schwierig, da diese sich aufgrund der Einzelansteuerung relativ zueinander bewegen, so dass eine exakte Positionierung nicht möglich ist.

Aufgabe der vorliegenden Erfindung ist es, ein Transportmittel bereitzustellen, mit dem schwere Lasten hochpräzise verfahren und positioniert werden können. Erfindungsgemäß wird diese Aufgabe durch einen Fahrzeugverbund mit den Merkmalen des Anspruchs 1 gelöst. Vorteilhafte Ausgestaltungen und Weiterbildungen der Erfindung sind in den Unteransprüchen beschrieben.

Der erfindungsgemäße Fahrzeugverbund aus einer Vielzahl oben beschriebener Einzelfahrzeuge sieht vor, dass die Einzelfahrzeuge über Verbindungselemente mechanisch miteinander gekoppelt und die Radantriebe der Einzelfahrzeuge über eine Verbundsteuerung selektiv ansteuerbar sind. Die mechanische Verbindung der Einzelfahrzeuge, die eine Relativbewegung zueinander innerhalb der Fahrebene nicht zulässt, ermöglicht eine sichere Positionierung der Lasten auf den Einzelfahrzeugen, ohne dass die Gefahr besteht, dass die Einzelfahrzeuge auf unterschiedlichen Routen fahren. Über die Verbundsteuerung ist es möglich, die jeweiligen Radantriebe so anzusteuern, dass nur das jeweils benötigte Rad angetrieben wird, so dass aus den Einzelfahrzeugen mit in der Regel vier angetriebenen Rädern ein Fahrzeugverbund wird, dessen Räder je nach Bedarf einzeln ansteuerbar sind. Dabei ist es insbesondere vorgesehen, dass die im Fahrzeugverbund an den Ecken angeordneten Räder angetrieben sind, während die innen liegenden Räder abgeschaltet oder als Hilfsantriebe ausgestaltet sind. An dem Chassis sind Kopplungseinrichtungen ausgebildet, die eine formschlüssige Kopplung zweier Einzelfahrzeuge miteinander ermöglichen.

Eine Weiterbildung der Erfindung sieht vor, dass das Chassis eines Einzelfahrzeugs viereckig, insbesondere rechteckig oder quadratisch aufgebaut ist und die Räder seitlich nicht über das Chassis hinausragen. Dadurch ist es möglich, dass die Chassis bündig aneinander gekoppelt werden können, ohne dass die Räder miteinander kollidieren.

Die Kopplungseinrichtungen können einen vertikalen Versatz zweier Einzelfahrzeuge zueinander zulassen, um Fahrbahnunebenheiten bei den insbesondere ungefederten Einzelfahrzeugen auszugleichen. Ein Höhenversatz aufgrund von Fahrbahnunebenheiten kann nicht ausgeschlossen werden und muss daher kompensiert werden, wohingegen die Kopplungseinrichtungen so zueinander angeordnet sind, dass in einer horizontalen Ebene kein Versatz zwischen den Einzelfahrzeugen zugelassen wird.

Um den Höhenversatz zu ermöglichen, sind die Kopplungseinrichtungen als Laschen mit einer Bohrung ausgebildet, die mit Bolzen an korrespondierenden Ausnehmungen der Einzelfahrzeuge festlegbar sind. Diese Art der formschlüssigen Verbindung ermöglicht es, sehr schnell aus mehreren Einzelfahrzeugen einen Fahrzeugverbund aufzubauen, der über eine Verbundsteuerung bewegt werden kann. Der modulare Aufbau des Fahrzeugverbundes ermöglicht es, die Transportlasten der Einzelfahrzeuge zu addieren, so dass bei einem Fahrzeugverbund aus vier Fahrzeugen die vierfache Nutzlast bewegt werden kann.

Die Bohrungen in den Kopplungseinrichtungen sind ballig ausgebildet, um den Höhenunterschied bei einer unebenen Fahrbahn auszugleichen.

Zur Bereitstellung einer formschlüssigen Verbindung der Einzelfahrzeuge miteinander sind die Laschen der Kopplungseinrichtungen als über das Chassis hinausstehend, insbesondere als dreieckige Laschen ausgebildet, wohingegen die Ausnehmungen als Schlitze in dem Chassis der Einzelfahrzeuge ausgebildet sind. Sowohl die Schlitze als auch die Laschen weisen zueinander fluchtende Bohrungen auf, in die die Befestigungsbolzen einsteckbar sind.

In dem Fahrzeugverbund ist es insbesondere vorgesehen, dass unmittelbar nebeneinander angeordnete Räder miteinander gekoppelter Einzelfahrzeuge antriebslos geschaltet sind, um lediglich die äußeren Eckräder antreiben zu müssen, um die volle Manövrierfähigkeit des Fahrzeugverbundes herzustellen.

Um die Einzelfahrzeuge antriebslos zu schalten, kann an den Kopplungseinrichtungen ein Signalgeber angeordnet sein, der bei Herstellen der formschlüssigen Verriegelung zwischen den Einzelfahrzeugen die jeweils der Verriegelungsstelle benachbarten Räder antriebslos schaltet, so dass diese lediglich mitlaufen. Dadurch ist gewährleistet, dass bei Vorliegen eines Fahrzeugverbundes lediglich die Eckräder des Fahrzeugverbundes angetrieben werden, während die innen liegenden Räder keinen Anteil an der Antriebsleistung haben, jedoch vollstandig für die Übertragung der Gewichtskraft auf den Untergrund einsetzbar sind. Alternativ kann eine selektive Aktivierung oder Deaktivierung der einzelnen Antriebe über ein Modul innerhalb der Verbundsteuerung erfolgen.

Sofern ein Einzelfahrzeug grundsätzlich dafür vorgesehen ist, von anderen Einzelfahrzeugen eingeschlossen zu werden oder als nicht angetriebenes Einzelfahrzeug zu fungieren, kann vorgesehen sein, dass die einzelnen Räder keine Antriebe, die insbesondere als Nabenantriebe ausgebildet sind, aufweisen, um Kosten und Gewicht zu sparen. Bei solchen Einzelfahrzeugen handelt es sich dann um ein Chassis mit Rädern ohne eigenen Antrieb.

Zur einfachen Aufnahme von Bauteilen sind an jedem Chassis Aufnahmen für einen Bauteilträger angeordnet, auf dem das zu transportierende Objekt abgelegt werden kann. Die Aufnahmen für den Bauteilträger lassen eine sichere Festlegung des Bauteilträgers auf dem jeweiligen Einzelfahrzeug zu, insbesondere können die Bauteilträger auf jedem Chassis verschraubt werden.

Die Antriebe der Räder können einzeln zu- oder abschaltbar sein, wobei vorgesehen ist, dass die Einzelfahrzeuge dergestalt miteinander gekoppelt sind, dass die Drehachsen der Räder und die Seitenkanten des Chassis parallel zueinander verlaufen, um eine hohe Gleichmäßigkeit im Rollverhalten des Fahrzeugverbundes zu erhalten.

Bei einer viereckigen, insbesondere rechteckigen Ausgestaltung der Einzelfahrzeuge ist es vorgesehen, dass an den Ecken des Fahrzeugverbundes vier einzeln antreibbare und abbremsbare Räder angeordnet sind.

Nachfolgend werden Ausführungsbeispiele der Erfindung anhand der Figuren näher erläutert. Gleiche Bezugszeichen in den unterschiedlichen Figuren bezeichnen gleiche Bauelemente. Es zeigen:
- Figur 1 -: einen Fahrzeugverbund aus drei Einzelfahrzeugen;
- Figuren 2 bis 9 -: Varianten von Fahrzeugverbünden; sowie
- Figur 10 -: eine vergrößerte Darstellung einer Kopplung.

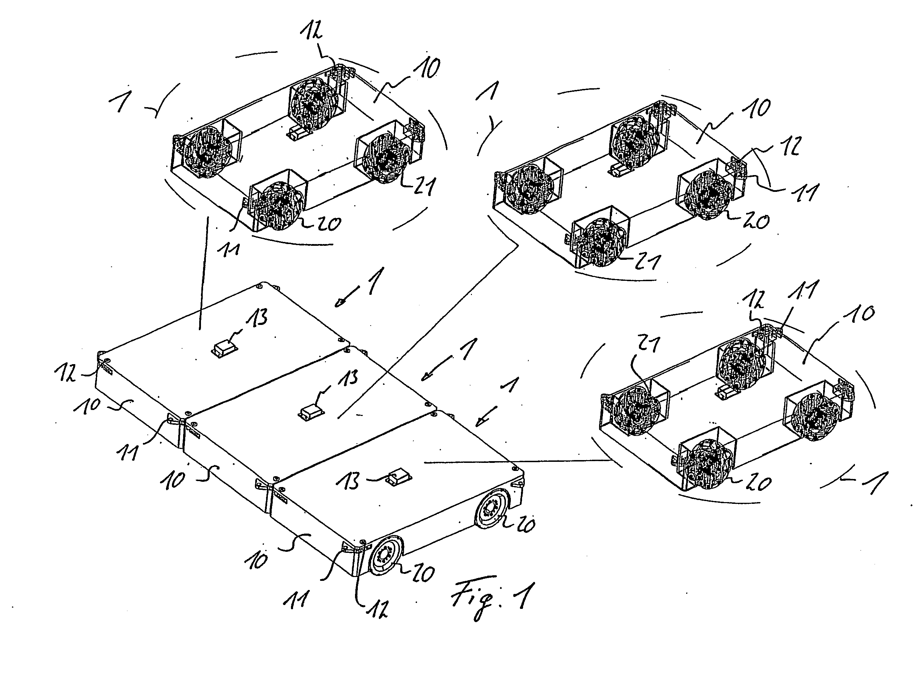

In der Figur 1 ist ein Fahrzeugverbund aus drei Einzelfahrzeugen 1 dargestellt, die ein rechteckiges Chassis 10 mit einer im Wesentlichen ebenen Oberfläche und Aufnahmen 13 für einen nicht dargestellten Bauteilträger aufweisen. An den Seitenkanten der Chassis 10 sind Kopplungseinrichtungen 11, 12 angeordnet, die eine formschlüssige Verbindung der Einzelfahrzeuge 1 miteinander zulassen. Die Kopplungseinrichtungen 11, 12 sind als Laschen 11 1 und Schlitze 12 ausgebildet, die in Uhrzeigersinn jeweils abwechselnd an den Ecken des Chassis 10 ausgebildet sind, so dass eine beliebige Anzahl von Einzelfahrzeugen 1 miteinander gekoppelt werden kann. Die Kopplung erfolgt, durch das Nebeneinanderfahren zweier Einzelfahrzeuge 1 und dem Einführen der Laschen 11 in die Schlitze 12. Eine Verriegelung findet durch das Einführen eines nicht dargestellten Bolzens durch eine fluchtende Bohrung statt, die sowohl in den Laschen 11 als auch in den Wandungen beiderseits des Schlitzes 12 ausgebildet sind. Durch dieses einfache Stecksystem ist es möglich, mehrere Fahrzeuge miteinander so zu koppeln, dass sowohl die Seitenkanten des rechteckigen Chassis 10 als auch die Drehachsen der an dem Chassis 10 befestigen Räder 20 parallel zueinander verlaufen, In der Fahrebene ist eine Verlagerung der Chassis 10 zueinander nicht möglich, lediglich ein Höhenausgleich, der aufgrund von Fahrbahnunebenheiten notwendig ist, wird durch eine entsprechende Ausgestaltung der Laschen 11 und der Schlitze 12 bzw. eine ballige Kontur der Bohrungen in den Laschen 11 1 und Schlitzen 12 ermöglicht.

Die Einzelfahrzeuge 1. weisen an ihren Eckbereichen Räder 20 mit Nabenantrieben 21 auf. Die Räder 20 weisen neben einem Radträger ballig ausgebildete, in einem 45° Winkel zu der Drehachse des Radträgers ausgebildete Rollkörper auf, über die eine Bewegung der Einzelfahrzeuge durch gezieltes Verändern der Drehrichtung oder ein Abbremsen der einzelnen Antriebe 21 der jeweiligen Räder 20 in alle Richtungen in der Fahrebene ermöglicht wird.

Aufgrund der begrenzten Radlasten kann ein Einzelfahrzeug 1 nur eine limitierte Nutzlast tragen. Bei einer beispielhaften Radlast von maximal 3 t und einem Fahrzeuggewicht von ca. 2 t ist die maximale Belastbarkeit pro Einzelfahrzeug 1 auf 10 t begrenzt. Ein Fahrzeugverbund, wie in der Figur 1 dargestellt ist, kann somit 30 t Nutzlast bewegen, die über einen Bauteilträger, der an den Aufnahmen 13 festgelegt ist, gleichmäßig auf die Einzelfahrzeuge verteilt wird.

Um die Steuerung des Fahrzeugverbundes zu vereinfachen, ist es vorgesehen, dass die Radantriebe 21 der jeweiligen Räder 20 der Einzelfahrzeuge 1 über eine Verbundsteuerung selektiv ansteuerbar sind. Insbesondere ist es vorgesehen, dass die nicht an den Eckpunkten des Fahrzeugverbundes angeordneten Räder 20 antriebslos geschaltet werden, also lediglich mitlaufen und nur die Gewichtskraft des zu transportierenden Bauteiles auf den Untergrund übertragen.

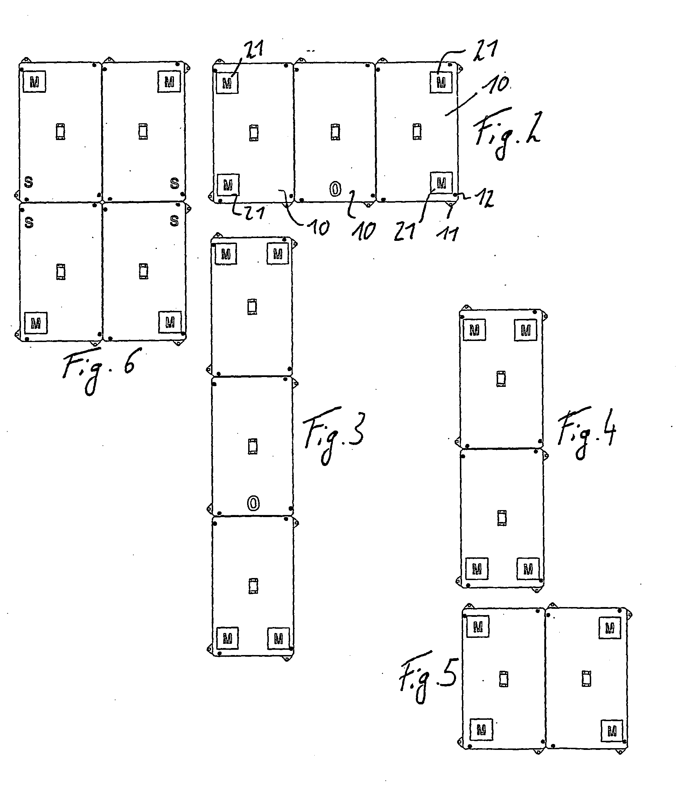

Mögliche Anordnungen von Einzelfahrzeugen zu Fahrzeugverbünden sind in den Figuren 2 bis 9 dargestellt. Figur 2 zeigt einen Dreierverbund gemäß Figur 1, wobei die Antriebe 21 an den Eckpunkten des Fahrzeugverbundes aktiviert sind. Die innen liegenden Räder sind antriebslos geschaltet. Die angetriebenen Radsätze sind durch das Zeichen M gekennzeichnet. Diese Räder übernehmen die Hauptantriebs- und Hauptsteuerarbeit für den Fahrzeugverbund. Das in der Mitte liegende Einzelfahrzeug 1 hat keine Antriebe für die Räder und ist mit dem Zeichen 0 gekennzeichnet. Sämtliche Einzelfahrzeuge 1 oder Chassis 10 ohne antreibbare Räder sind mit dem Zeichen 0 gekennzeichnet.

Eine andere Anordnung der Einzelfahrzeuge ist in der Figur 3 gezeigt. Die angetriebenen Räder befinden sich nun nicht mehr an den Längsseiten der rechteckigen Chassis der äußeren Einzelfahrzeuge, sondern an den Stirn- oder Schmalseiten, während das in der Mitte angeordnete Einzelfahrzeug ohne eigenen Radantrieb ist. Die jeweils benachbarten Räder an einer Kopplungsstelle sind antriebslos geschaltet, so dass nur noch die an den Eckpunkten des Fahrzeugverbundes angeordneten Räder angetrieben sind.

In den Figuren 4 und 5 ist eine Anordnung eines Fahrzeugverbundes aus zwei Einzelfahrzeugen gezeigt, bei denen entweder die längsseitigen oder die stirnseitigen Räder angetrieben sind. Diese Einzelfahrzeuge weisen grundsätzlich vier einzeln antreibbare und abbremsbare Meccanum-Räder auf, deren Antriebe entweder automatisch über Kontakte oder separat über die Verbundsteuerung aktiviert oder deaktiviert werden können. Die Traglast eines Zweierverbundes beträgt entsprechend 20 t.

Bei der Anordnung der Einzelfahrzeuge gemäß Figur 6 ist jeweils nur ein Antrieb eines Rades aktiviert, die übrigen Radantriebe sind deaktiviert. Um den Rollwiderstand zu verringern oder die Antriebe der eckseitigen Räder zu unterstützen, können einzelne Räder als Hilfsantriebe zugeschaltet werden, die mit S gekennzeichnet sind. Die eckseitigen Räder haben dann die Masterfunktion, während die Hilfsantriebe die Slave-Funktion innehaben. Die Tragfähigkeit beträgt aufgrund der vier Einzelfahrzeuge 40 t.

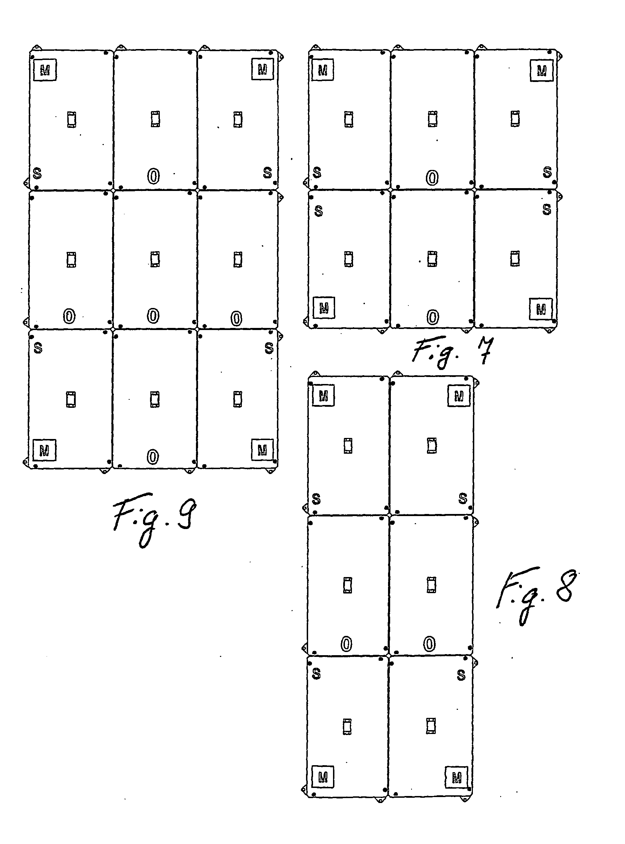

Eine Anordnung von sechs Einzelfahrzeugen ist in den Figuren 7 und 8 dargestellt, die jeweils mittigen Einzelfahrzeuge sind als reines Fahrwerk ohne Antriebe in den Rädern ausgestaltet, während die an den Ecken des Fahrzeugverbundes angeordneten Radantriebe die Masterfunktion innehaben. Während bei dem Fahrzeugverbund gemäß der Figur 6 entlang der Längsseiten die beiden gegenüberliegenden Räder die Slave-Funktion ausüben können, kann gemäß der Figur 8 nur jeweils ein Radantrieb der an den Ecken angeordneten Einzelfahrzeuge die Slave-Funktion übernehmen.

Die Figur 9 zeigt einen Fahrzeugverbund aus neun Einzelfahrzeugen mit insgesamt 36 Rädern und einer maximalen Belastbarkeit von 90 t. Die Belastung wird über die Aufnahmen 13 und einen Bauteilträger gleichmäßig auf die Fahrzeuge verteilt. Auch bei der Ausgestaltung des Fahrzeugverbundes gemäß der Figur 9 sind nur die eckseitigen Räder mit Masterfunktion angetrieben, während entlang der Schmalseiten insgesamt zwei Radantriebe mit Slave-Funktion versehen sind.

Jedes Einzelfahrzeug 1, das über angetriebene Räder verfügt, ist mit einer fahrzeugspezifischen Funksteuerung ausgestattet, die ein Fahren des Einzelfahrzeuges 1 in allen Freiheitsgraden in einer Fahrebene zulässt. Im Fahrzeugverbund ist die Einzelsteuerung der Einzelfahrzeuge 1 inaktiv. Der Fahrzeugverbund wird von einer übergeordneten Verbundfernsteuerung geleitet, die insbesondere als Funkfernsteuerung ausgebildet ist, die in der Lage ist, alle für den Fahrzeugverbund spezifischen Signale an die Einzelfahrzeuge 1 abzugeben, z. B. das Lösen der Bremsen und die Aktivierung der jeweiligen Antriebsmotore. Die modulare Ausgestaltung des Fahrzeugverbundes ermöglicht eine einfache und schnelle Anpassung an die jeweiligen Transport- und Positionieranforderungen durch Hinzufügen oder Entfernen von Einzelfahrzeugen.

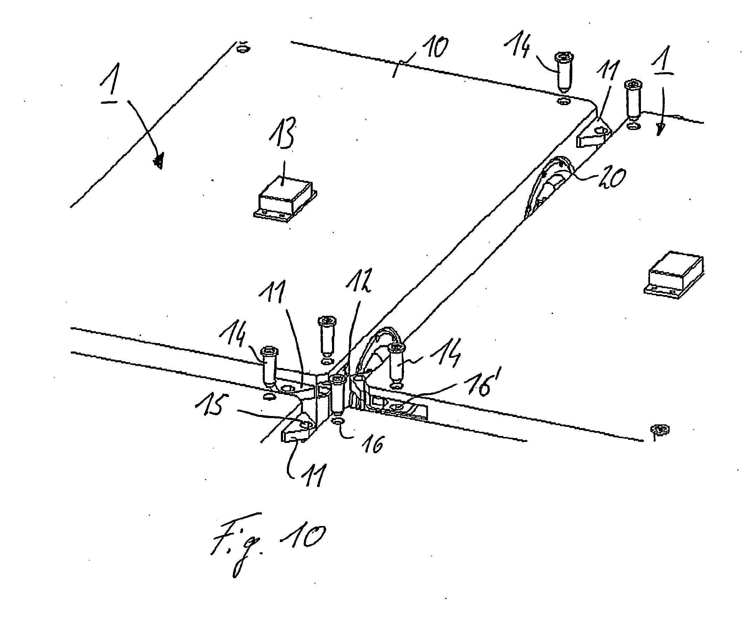

Die Figur 10 zeigt in einer vergrößerten Darstellung das Prinzip eines Fahrwerkverbundes aus vorliegend vier Einzelfahrzeugen 1. Im Uhrzeigersinn abwechselnd sind an jeder Ecke eines Einzelfahrzeuges Schlitze 12 und hervorstehende Laschen 11 angeordnet, so dass bei einem Aneinanderfahren der Einzelfahrzeuge 1 dergestalt, dass die Längs- und Querseiten der Einzelfahrzeuge 1 aneinander anliegen, die Laschen 11 in die Schlitze 12 hineinragen. In den Laschen 11 sind Bohrungen 15 eingebracht, die mit Bohrungen 16 auf der Oberseite des Einzelfahrzeuges 1 fluchten, wenn zwei Einzelfahrzeuge korrekt zueinander ausgerichtet sind. In diese fluchtenden Bohrungen 15, 16 wird ein Verriegelungsbolzen 14 eingeführt, der beispielsweise so ausgebildet sein kann, dass die Oberfläche des Bolzens 14 mit der Oberfläche des Einzelfahrzeuges 1 bündig abschließt, um eine möglichst glatte Oberfläche des Fahrzeugverbundes zu erhalten. Der Verriegelungsbolzen 14 kann durch die Lasche 11 hindurch in eine zweite Bohrung 16' hineinragen, so dass der Bolzen 14 an zwei Stellen in dem Einzelfahrzeug 1 gelagert ist. Dadurch wird eine verbesserte Lastverteilung erreicht.

Die Bolzen 14 können auch als Schraubbolzen ausgeführt sein. Eine ballige Kontur sowohl der Bohrungen 15, 16 als auch der Bolzen 14 kann eine Relativbewegung der Einzelfahrzeuge 1 zueinander erleichtern.

## Patentansprüche

1. Fahrzeugverbund aus einer Vielzahl von Einzelfahrzeugen (1) mit einem Chassis (10), bei dem zumindest an einem Einzelfahrzeug (1) ein einzeln antreibbares und abbremsbares Rad (20) angeordnet ist, das einen Radträger mit an dessen Umfang angeordneten Rollkörpern aufweist, die eine ballige Kontur aufweisen und deren Drehachsen in einem Winkel zu der Drehachse des Radträgers angeordnet sind, mit denen eine Bewegung des Einzelfahrzeuges (1) in alle Richtungen in der Fahrebene möglich ist, wobei die Einzelfahrzeuge (1) über Verbindungselemente (11, 12, 14) mechanisch miteinander gekoppelt und die Radantriebe (21) der Einzelfahrzeuge (1) über eine Verbundsteuerung selektiv ansteuerbar sind, **dadurch gekennzeichnet, dass** an dem Chassis (10) Kopplungseinrichtungen (11, 12) ausgebildet sind, die eine formschlüssige Kopplung zweier Einzelfahrzeuge (1) miteinander ermöglichen, welche Kopplung eine Relativbewegung der Einzelfahrzeuge zueinander innerhalb der Fahrebene nicht zulässt.

2. Fahrzeugverbund nach Anspruch 1, **dadurch gekennzeichnet, dass** das Chassis (10) viereckig, insbesondere rechteckig aufgebaut ist und die Räder (20) seitlich nicht über das Chassis (10) hinausragen.

3. Fahrzeugverbund nach Anspruch 1 oder 2, **dadurch gekennzeichnet, dass** die Kopplungseinrichtungen (11, 12) einen vertikalen Versatz zweier Einzelfahrzeuge (1) zueinander zulassen.

4. Fahrzeugverbund nach einem der voranstehenden Ansprüche, **dadurch gekennzeichnet, dass** die Kopplungseinrichtungen (11, 12) als Laschen mit zumindest einer Bohrung (15) ausgebildet sind, die mit Bolzen (14) an korrespondierenden Ausnehmungen der Einzelfahrzeuge (1) festlegbar sind.

5. Fahrzeugverbund nach Anspruch 4, **dadurch gekennzeichnet, dass** die Bohrungen (15) in den Kopplungseinrichtungen (11, 12) ballig ausgebildet sind.

6. Fahrzeugverbund nach Anspruch 4 oder 5, **dadurch gekennzeichnet, dass** die Laschen (11) über das Chassis (10) hinausstehend, insbesondere dreieckig und die Ausnehmungen (12) als Schlitze in dem Chassis (10) der Einzelfahrzeuge ausgebildet sind.

7. Fahrzeugverbund nach einem der voranstehenden Ansprüche, **dadurch gekennzeichnet, dass** unmittelbar nebeneinander angeordnete Räder (20) miteinander gekoppelter Einzelfahrzeuge (1) antriebslos geschaltet sind.

8. Fahrzeugverbund nach einem der voranstehenden Ansprüche, **dadurch gekennzeichnet, dass** ein Chassis (10), dessen Räder (20) neben Rädern anderer Chassis (10) angeordnet sind, nur nichtangetriebene Räder (20) aufweist.

9. Fahrzeugverbund nach einem der voranstehenden Ansprüche, **dadurch gekennzeichnet, dass** auf jedem Chassis (10) Aufnahmen (13) für einen Bauteilträger angeordnet sind.

10. Fahrzeugverbund nach einem der voranstehenden Ansprüche, **dadurch gekennzeichnet, dass** Antriebe (21) der Räder (20) einzeln zu- oder abschaltbar sind.

11. Fahrzeugverbund nach einem der voranstehenden Ansprüche, **dadurch gekennzeichnet, dass** die Einzelfahrzeuge (1) so miteinander gekoppelt sind, dass die Drehachsen der Räder (20) und die Seitenkanten der Chassis (10) parallel zueinander verlaufen.

12. Fahrzeugverbund nach einem der voranstehenden Ansprüche, **dadurch gekennzeichnet, dass** die Einzelfahrzeuge (1) an den Ecken des Fahrzeugverbundes vier einzeln antreibbare und abbremsbare Räder (20) aufweisen.

## Claims

1. Vehicle combination comprising a plurality of individual vehicles (1) having a chassis (10), in which vehicle combination at least one individual vehicle (1) has arranged on it a wheel (20) which can be driven and braked individually and which has a wheel carrier with rolling bodies arranged on the circumference thereof, which rolling bodies have a spherical contour and are arranged with their rotational axes at an angle to the rotational axis of the wheel carrier and by means of which rolling bodies a movement of the individual vehicle (1) is possible in all directions in the driving plane, with the individual vehicles (1) being mechanically coupled to one another by means of connecting elements (11, 12, 14), and with it being possible for the wheel drives (21) of the individual vehicles (1) to be actuated selectively by means of a combination controller, **characterized in that** coupling devices (11, 12) are formed on the chassis (10), which coupling devices (11, 12) enable positively locking coupling of two individual vehicles (1) to one another, which coupling does not permit a relative movement of the individual vehicles relative to one another within the driving plane.

2. Vehicle combination according to Claim 1, **characterized in that** the chassis (10) is of tetragonal, in particular rectangular, construction and the wheels (20) do not project laterally beyond the chassis (10).

3. Vehicle combination according to Claim 1 or 2, **characterized in that** the coupling devices (11, 12) permit a vertical offset of two individual vehicles (1) relative to one another.

4. Vehicle combination according to one of the preceding claims, **characterized in that** the coupling devices (11, 12) are formed as lugs with at least one bore (15), which lugs can be fixed by means of bolts (14) to corresponding recesses of the individual vehicles (1).

5. Vehicle combination according to Claim 4, **characterized in that** the bores (15) in the coupling devices (11, 12) are of spherical design.

6. Vehicle combination according to Claim 4 or 5, **characterized in that** the lugs (11) are formed so as to project beyond the chassis (10) and are in particular of triangular design, and the recesses (12) are formed as slots in the chassis (10) of the individual vehicles.

7. Vehicle combination according to one of the preceding claims, **characterized in that** wheels (20), which are arranged directly adjacent to one another, of individual vehicles (1) which are coupled to one another are switched into a non-driven state.

8. Vehicle combination according to one of the preceding claims, **characterized in that** a chassis (10) whose wheels (20) are arranged adjacent to wheels of other chassis (10) has only non-driven wheels (20).

9. Vehicle combination according to one of the preceding claims, **characterized in that** receptacles (13) for a component carrier are arranged on each chassis (10).

10. Vehicle combination according to one of the preceding claims, **characterized in that** drives (21) of the wheels (20) can be activated or deactivated individually.

11. Vehicle combination according to one of the preceding claims, **characterized in that** the individual vehicles (1) are coupled to one another in such a way that the rotational axes of the wheels (20) and the side edges of the chassis (10) run parallel to one another.

12. Vehicle combination according to one of the preceding claims, **characterized in that** the individual vehicles (1) at the corners of the vehicle combination have four wheels (20) which can be driven and braked individually.

## Revendications

1. Véhicule composite à base de plusieurs véhicules individuels (1) qui comprennent un châssis (10), dans lequel est au moins agencée sur un véhicule individuel (1) une roue (20) pouvant être freinée et entraînée individuellement, qui présente un support de roue avec, agencés sur son pourtour, des galets de roulement qui présentent un contour convexe et dont les axes de rotation sont agencés avec un angle par rapport à l'axe de rotation du support de roue, et avec lesquels un mouvement du véhicule individuel (1) est possible dans toutes les directions dans le plan de conduite, les véhicules individuels (1) étant couplés ensemble mécaniquement par des éléments de liaison (11, 12, 14) et les entraînements de roue (21) des véhicules individuels (1) étant actionnables de façon sélective par un pilotage d'assemblage composite, **caractérisé en ce que** des dispositifs de couplage (11, 12) agencés sur le châssis (10) permettent entre deux véhicules individuels (1) un couplage mutuel par formes conjuguées, qui n'autorise pas un mouvement relatif des véhicules individuels l'un par rapport à l'autre à l'intérieur du plan de conduite.

2. Véhicule composite selon la revendication 1, **caractérisé en ce que** le châssis (10) est construit quadrangulaire, en particulier rectangulaire, et les roues (20) ne dépassent pas latéralement du châssis (10).

3. Véhicule composite selon la revendication 1 ou 2, **caractérisé en ce que** les dispositifs de couplage (11, 12) autorisent un décalage vertical de deux véhicules individuels (1) l'un par rapport à l'autre.

4. Véhicule composite selon l'une des revendications précédentes, **caractérisé en ce que** les dispositifs de couplage (11, 12) sont formés en tant que languettes comprenant au moins un perçage (15), pouvant être fixées à l'aide de chevilles (14) à des évidements correspondant des véhicules individuels (1).

5. Véhicule composite selon la revendication 4, **caractérisé en ce que** les perçages (15) sont formés convexes dans les dispositifs de couplage (11, 12).

6. Véhicule composite selon l'une des revendications 4 ou 5, **caractérisé en ce que** les languettes (11) sont formées débordantes du châssis (10), en particulier triangulaires, et les évidements (12) sont formés en tant que fentes dans le châssis (10) des véhicules individuel.

7. Véhicule composite selon l'une des revendications précédentes, **caractérisé en ce que** des roues (20) de véhicules individuels (1) couplés ensemble agencées directement côte à côte, sont mises à l'état non entraîné.

8. Véhicule composite selon l'une des revendications précédentes, **caractérisé en ce qu'**un châssis (10), dont les roues (20) sont agencées à côté de roues d'autres châssis (10), présente uniquement des roues (20) non entraînées.

9. Véhicules composite selon l'une des revendications précédentes, **caractérisé en ce que** des positionneurs (13) pour un support d'élément de construction sont agencés sur chaque châssis (10).

10. Véhicule composite selon l'une des revendications précédentes, **caractérisé en ce que** des entraînements (21) des roues (20) peuvent être individuellement enclenchés ou désenclenchés.

11. Véhicule composite selon l'une des revendications précédentes, **caractérisé en ce que** les véhicules individuels (1) sont couplés ensemble de façon que les axes de rotation des roues (20) et les bords latéraux du châssis (10) s'étendent parallèlement les uns aux autres.

12. Véhicule composite selon l'une des revendications précédentes, **caractérisé en ce que** les véhicules individuels (1) présentent aux angles du véhicule composite quatre roues (20) pouvant être freinées et entraînées individuellement.
